**Europäisches Patentamt**

(19) **European Patent Office**

**Office européen des brevets**

(11) Veröffentlichungsnummer: **0 029 144**
**B1**

(12) **EUROPÄISCHE PATENTSCHRIFT**

(45) Veröffentlichungstag der Patentschrift:
**12.01.83**

(51) Int. Cl.³: **C 09 D 3/80,** C 08 L 33/12,
**B 27 K 3/15**

(21) Anmeldenummer: **80106671.3**

(22) Anmeldetag: **30.10.80**

(54) **Wässrige Beschichtungsmittel für Holzoberflächen.**

(30) Priorität: **09.11.79 AT 7193/79**

(43) Veröffentlichungstag der Anmeldung:
**27.05.81 Patentblatt 81/21**

(45) Bekanntmachung des Hinweises auf die Patenterteilung:
**12.01.83 Patentblatt 83/2**

(84) Benannte Vertragsstaaten:
**CH DE FR GB IT LI NL SE**

(56) Entgegenhaltungen:
**DE-A-2 223 046**
**DE-B-1 291 041**
**US-A-3 701 746**

(73) Patentinhaber: **VIANOVA KUNSTHARZ
AKTIENGESELLSCHAFT, Postfach 191 Leechgasse 21,
A-8011 Graz (AT)**

(72) Erfinder: **Zima, Herbert, Dr., Eichenweg 7, A-8042 Graz
(AT)**
Erfinder: **Tulacs, Laszlo, Dipl.-Ing.,
Münzgrabengürtel 21, A-8020 Graz (AT)**

(74) Vertreter: **Pitter, Robert, Dr. et al, Leechgasse 21,
A-8010 Graz (AT)**

## Wässrige Beschichtungsmittel für Holzoberflächen

Die vorliegende Erfindung betrifft wässrige Beschichtungsmittel für Holzoberflächen, welche zur Erzielung farbloser offen- bis geschlossenporiger Beschichtungen geeignet sind. Die Beschichtungsmittel basieren auf N-Methylolacrylamideinheiten aufweisenden Polymerdispersionen, welche gegebenenfalls zusammen mit einem Grundlack auf Basis eines wasserlöslichen Acrylcopolymerisats verarbeitet werden.

Das Lackieren von Holz mit farblosen Lacken wird ausführlich im «Lehrbuch der Lacke und Beschichtungen» von H. Kittel, Band V, Seite 305–317, Verlag W.A. Colomb, 1977 beschrieben. Wie dort gesagt, werden für diesen Zweck vor allem CN-Lacke (Cellulosenitrat-Lacke, üblicherweise kurz Nitrolacke genannt) sowie säurehärtende Alkyd-Aminoharz-Lacke, Polyurethanlacke und Lacke auf Basis von ungesättigten Polyestern eingesetzt. Alle diese Beschichtungsmittel benötigen für die Verarbeitung jedoch grosse Mengen spezieller organischer Lösungsmittel bzw. polymerisierbarer Monomere, welche zum Teil sogar narkotische Wirkung haben.

Es besteht heute daher der klare Wunsch nach Überzugsmitteln auf Wasserbasis, welche keine Belastung für die Umwelt darstellen und in ihren Eigenschaften den Nitrolacken entsprechen.

Polymerdispersionen, welche N-Methylolacrylamideinheiten enthalten, sind für verschiedene Anwendungszwecke aus der Literatur bekannt.

So wird in der US-PS 3 856 734 die Herstellung von Dispersionen aus Vinylacetat, N-Methylolacrylamid und Acrylsäure beschrieben, die zum Verleimen von Sperrholz eingesetzt werden können.

Acrylatdispersionen, welche neben den üblichen Acryl- oder Methacrylsäureestern gegebenenfalls auch N-Methylolacrylamid enthalten können, werden gemäss der US-PS 3 790 520 für eine Verwendung in der Textilindustrie, aber auch für den Oberflächenschutz von Kunststoffen, Metall oder Holz beschrieben.

Die in der DE-AS 10 47 431 beschriebenen Dispersionen enthalten ebenfalls N-Methylolacrylamideinheiten, welche jedoch bereits bei Herstellung der Dispersionen zur Vernetzung der Teilchen herangezogen werden.

Die DE-OS 25 35 660 beschreibt die Herstellung selbstvernetzender, methylolierte Carbonsäureamide enthaltender Polymerdispersionen und Polymerisatlösungen, wobei Acrylamid enthaltende Emulsionspolymerisate hergestellt und nachträglich mit methylolierten Carbonsäureamiden umgesetzt werden.

Diese bekannten Dispersionen ergeben bei den Einbrennbedingungen, die bei Holz angewendet werden können, Beschichtungen, die weder in bezug auf Kratzfestigkeit, Härte und Elastizität noch in ihrer Stapelfestigkeit den Anforderungen der Praxis entsprechen.

Aufgabe der vorliegenden Erfindung ist die Bereitstellung von Beschichtungsmitteln für Holzoberflächen, insbesondere für die Möbellackierung, welche anstelle der üblichen Nitrolacke eingesetzt werden können, jedoch einen möglichst niedrigen Anteil an organischen Lösungsmitteln aufweisen.

Von seiten der Möbelindustrie wird von solchen Beschichtungsmitteln gefordert, dass sie bereits nach kurzzeitiger Trocknung bei 70–90°C grosse Härte und Kratzfestigkeit aufweisen, damit die Werkstücke sofort ohne Beschädigung der Oberfläche gestapelt werden können. Weiters wird von der Beschichtung verlangt, dass sie die Charakteristika der Holzoberflächen, wie Farbe und Maserung, nicht verfälscht und die Beständigkeit der Oberfläche insbesondere gegenüber Wasser verbessert.

Diese Forderungen können erfindungsgemäss durch Verwendung von Polymerdispersionen, welche Copolymerisate mit hoher Glasübergangstemperatur in Kombination mit ausgewählten Koalesziermitteln und in Kombination mit einem Selbstvernetzungsmechanismus enthalten, erfüllt werden.

Die vorliegende Erfindung betrifft dementsprechend die Verwendung von N-Methylol(meth)acrylamid enthaltenden Polymerdispersionen, welche aus

30–65 Gew.-% Methylmethacrylat
10–17 Gew.-% Äthylacrylat
10–30 Gew.-% Butylmethacrylat
  5–20 Gew.-% Styrol und
  3–10 Gew.-% N-Methylol(meth)acrylamid
aufgebaut sind und welchen als Koalesziermittel 5 bis 15 Gew.-% (bezogen auf die Dispersion) eines Gemisches aus

20–65 Gew.-% eines hochsiedenden Lacklösungsmittels vom Typ des 2,2,4-Trimethylpentan-1,5-diol-mono-trimethylessigsäureesters und
80–35 Gew.% Äthylenglykolmonoäthylätheracetat und/oder Äthylenglykolmonobutylätheracetat zugesetzt wurden, gegebenenfalls in Kombination mit Grundlacken auf Basis kationischer wasserlöslicher Acrylcopolymerisate, für offenporige bis geschlossenporige Lackierungen von Holzoberflächen.

In einer besonders vorteilhaften Ausführungsform der Erfindung bauen sich die Dispersionen aus

45–55 Gew.-% Methylmethacrylat
12–15 Gew.-% Äthylacrylat
15–25 Gew.-% Butylmethacrylat
  5–10 Gew.-% Styrol und
  7– 9 Gew.-% N-Methylol-methacrylamid auf,
welchen als Koalesziermittel (bezogen auf die Dispersion)

4–6 Gew.-% des obengenannten hochsiedenden Lacklösungsmittels und

7–9 Gew.-% Äthylenglykolmonoäthyläthyeracetat oder

3–5 Gew.-% Äthylenglykolmonobutylätheracetat zugestzt wurden.

Die erfindungsgemässen Überzugsmittel bilden auf Holzoberflächen nach einer Trocknungszeit von 5–10 Minuten bei 75–90°C Überzüge, welche einen einwandfreien optischen Aspekt, ausgezeichnete Härte und Kratzfestigkeit sowie gute Wasserfestigkeit aufweisen. Die Eigenschaften entsprechen in allen Fällen optimal formulierten Nitrolacken, denen gegenüber sie die wesentlichen Vorteile der Unbrennbarkeit und der Ungiftigkeit haben. In der Gefahrenklassifikation entsprechen die erfindungsgemässen Dispersionen der YSAM-Gruppe 0. Die Überzüge weisen bereits nach relativ kurzer Abkühlzeit nach dem Einbrennen eine ausgezeichnete Stapelfestigkeit auf. Sie sind insbesondere zur Erzielung offenporiger Lackierungen geeignet.

Die Herstellung der Polymerdispersionen erfolgt in üblicher Weise durch Emulsionspolymerisation in Gegenwart anionischer und nichtionischer Emulgatoren und radikalischer Initiatoren. Dabei wird die Flotte, bestehend aus Wasser und Emulgatoren im Polymerisationsrührwerk vorgelegt, auf 85 bis 88°C erwärmt und aus drei getrennten Gefässen die Monomerenmischung, das Methylolmethacrylamid und die Initiatorlösung, gleichzeitig, im entsprechenden Verhältnis innerhalb von ca. 90 Minuten zugegeben. Nach Beendigung des Zulaufes wird ca. 40 Minuten bei 88 bis 90°C nachreagiert.

Die Polymerdispersionen bestehen erfindungsgemäss aus

30–65, vorzugsweise 45–55 Gew.-% Methylmethacrylat
10–17, vorzugsweise 12–15 Gew.-% Äthylacrylat
10–30, vorzugsweise 15–25 Gew.-% Butylmethacrylat
5–20, vorzugsweise 5–10 Gew.-% Styrol und
3–10, vorzugsweise 7–9 Gew.-% N-Methylol(meth)acrylamid.

Als anionische Emulgatoren eignen sich Alkylaryläthoxylatsulfate, die Sulfate von äthoxylierten Fettalkoholen, Dodecylbenzolsulfonat oder auch Sulfosuccinamate. Vorteilhaft werden ferner nichtionische Emulgatoren vom Typ äthoxylierter Alkylphenole in Mischung mit den anionischen Emulgatoren eingesetzt. Ebenso können auch geringe Mengen von vinylsulfonsaurem Natrium als zusätzlicher Emulgator mitpolymerisiert werden.

Als Koalesziermittel werden Mischungen aus 2,2,4-Trimethylpentan-1,5-diolmonotrimethylessigsäureester mit Äthylenglykolmonoäthylätheracetat oder Äthylenglykolmonobutylätheracetat im Verhältnis zwischen 20:80 und 65:35 eingesetzt. Die Koalesziermittel werden vor der Zugabe gemischt und die Mischung sehr langsam unter guter Rührung in die Dispersion eingebracht. Die Dispersionen sind auch nach dem Einbringen zur Koalesziermittel lagerstabil. Die zugesetzte Menge des Koalesziermittels beträgt 5 bis 15 Gew.-%, bezogen auf die Dispersion.

Vor allem die optischen Eigenschaften des farblos lackierten Holzes, wie das Hervortreten der natürlichen Maserung («Anfeuerung») oder die Gleichmässigkeit der Lackierung können durch die Verwendung eines Grundlackes auf Basis von speziellen wasserlöslichen Acrylcopolymerisaten noch verbessert werden.

Die für diesen Zweck geeigneten Acrylcopolymerisate sind Aminaddukte von Glycidylgruppen tragenden Copolymerisaten, welche aufgrund ihres kationischen Charakters durch Zusatz von anorganischen oder organischen Säuren in die wasserlösliche Salzform übergeführt werden können. Die Copolymerisate weisen folgende Monomerenzusammensetzung auf:

20–40 Gew.-% Glycidylmethacrylat
40–80 Gew.-% Methylmethacrylat –
0–40 Gew.-% andere (Meth)acrylsäure(cyclo)alkylester, deren Homopolymere eine Glasübergangstemperatur von über +40°C aufweisen.

Diese in üblicher Weise hergestellten Copolymerisate werden mit sekundären Aminen, welche 1 oder 2 Hydroxyalkylreste aufweisen umgesetzt, wobei pro Glycidylgruppe ein Mol des sekundären Amins zum Einsatz kommt. Die für den Grundlack verwendeten Copolymerisate werden durch Lösungspolymerisation in Äthanol oder Isopropanol, in bekannter Weise hergestellt. Dabei wird die Mischung der Monomeren, gemischt mit dem Regler der vorgelegten Mischung aus Lösungsmittel und Initiator langsam zugegeben. Bei Erreichen eines Polymerisationsumsatzes von praktisch 100% wird das Amin bei 80–85°C langsam zugetropft. Das erhaltene Addukt ist nach Neutralisation mit einer organischen oder anorganischen Säure mit Wasser praktisch unendlich verdünnbar.

Als Amine können sekundäre Mono- oder Dialkanolamine, wie Diäthanolamin, Di(iso)propanolamin, Cyclohexyläthanolamin oder Äthyläthanolamin verwendet werden. Der Grundlack zeigt ausgezeichnetes Eindringvermögen und nach dem Trocknen, welches üblicherweise während 3–10 Minuten bei 70–90°C erfolgt, praxisgerechte Härte, Elastizität und Schleifbarkeit.

Die Polymerdispersionen sowie gegebenenfalls der Grundlack können durch Streichen, Giessen, Spritzen etc. aufgetragen werden.

Die folgenden Beispiele erläutern die Erfindung, ohne sie in ihrem Umfang zu beschränken. Alle Angaben in Teilen und Prozenten beziehen sich auf Gewichtseinheiten.

Beispiel 1

In einem mit Rückflusskühler, Thermometer und Inertgaszuleitung ausgestatteten Polymerisationsrührwerk wird eine Flotte aus 1322 Teilen deionisiertem Wasser, 18 Teilen des Natriumsalzes eines mit 2 Mol Äthylenoxid umgesetzten und sulfierten Octylphenols, 12 Teilen eines mit 16 Mol Äthylenoxid umgesetzten Octylphenols und 7,2 Teilen vinylsulfonsaurem Natrium vorgelegt und auf 85–87°C erwärmt. Unter ständigem Rühren lässt man aus drei getrennten Gefässen, gleichzeitig, innerhalb von 90 Minuten in diese Flotte zulaufen:

1. Eine Monomerenmischung aus 645 Teilen Methylmethacrylat, 267 Teilen n-Butylmethacrylat, 180 Teilen Äthylacrylat und 66 Teilen Styrol,
2. 246 Teile einer 36%igen wässrigen Lösung von N-Methylolmethacrylamid und
3. eine Lösung von 3 Teilen Ammoniumperoxodisulfat in 90 Teilen Wasser.

Während der Polymerisation wird eine Temperatur von 86–88°C eingehalten. Nach Beendigung des Monomerenzulaufes wird 40 Minuten bei 88–90°C ausreagiert.

Die Disperison wird abgekühlt und unter gutem Rühren langsam mit einer Mischung aus 143 Teilen eines Lacklösungsmittels auf Basis 2,2,4-Trimethylpentan-1,5-diolmonotrimethylessigsäureester (Siedepunkt 180–182°C, bei 125mm Hg, z.B. Texanol® der Eastman Kodak Prod. Inc.) und 228 Teilen Äthylenglykolmonoäthylätheracetat oder 114 Teilen des entsprechenden Butylätheracetats versetzt.

Man erhält eine stabile, ca. 41%ige feinteilige Dispersion, die zur Prüfung auf verschiedene Holzoberflächen, und zwar mit Eiche, Walnuss bzw. Mahagoni furnierte Testbretter sowohl durch Spritzen als auch durch Giessen aufgetragen wird. Nach einer Ablüftzeit von 1 Minute wird die Beschichtung 5 Minuten bei 85°C getrocknet.

Die erhaltenen Überzüge weisen eine Schichtstärke von ca. 30 µm auf. Sie sind hart, sehr kratzfest und optisch einwandfrei. Der Buchholztest (Erichsen, DIN 53153) ergibt einen Wert von 1,7 mm. Die Farbe und Maserung der geprüften Hölzer wurde einwandfrei verstärkt.

Beispiel 2

Man verfährt wie in Beispiel 1, gibt jedoch zu einer Flotte aus 1268 Teilen deionisiertem Wasser, 18 Teilen des Natriumsalzes eines mit 2 Mol Äthylenoxid umgesetzten und sulfierten Octylphenols, 12 Teilen eines mit 16 Mol Äthylenoxid umgesetzten Octylphenols und 7,2 Teilen vinylsulfonsaurem Natrium bei 85–87°C folgende Zuläufe:

1. Eine Monomerenmischung aus 481 Teilen Methylmethacrylat, 342 Teilen n-Butylmethacrylat, 144 Teilen Äthylacrylat und 156 Teilen Styrol;
2. 282 Teile einer 36%igen wässrigen Lösung von N-Methylolmethacrylamid;
3. eine Lösung von 3 Teilen Ammoniumperoxodisulfat in 90 Teilen Wasser.

Als Koalesziermittel wird in diesem Fall eine Mischung aus 111 Teilen des auch im Beispiel 1 verwendeten hochsiedenden Lacklösungsmittel und 84 Teilen Äthylenglykolmonobutylätheracetat verwendet.

Man erhält eine Dispersion, welche gleiche Eigenschaften, wie die in Beispiel 1 angegebene Zusammensetzung aufweist.

Die wasserlöslichen kationischen Copolymerisate, wie sie für geeignete Grundlacke verwendet werden, werden wie folgt hergestellt:

In einem mit Rührer, Thermometer und Rückflusskühler ausgestatteten Reaktionsgefäss werden 40 Teile Isopropanol, in welchem 2,5 Teile Azobisisobutyronitril gelöst sind, vorgelegt und auf ca. 80°C erwärmt. Dann werden ein Monomerengemisch gemäss Tabelle 1 zusammen mit 2 Teilen Dodecylmerkaptan bzw. eine Lösung von 2,5 Teilen Azobisisobutyronitril in 20 Teilen einer Isopropanol-Äthylacetat (1:1)-Mischung gleichzeitig und kontinuierlich aus getrennten Gefässen zugegeben. Die Zugabe erfolgt so, dass zu jedem Zeitpunkt ein Polymerisationsumsatz von etwa 90% gewährleistet ist. Die Polymerisation ist beendet, wenn nach dem Ende der Zugaben ein Polymergehalt erreicht ist, welcher einem 98–100%igen Umsatz entspricht. Bei 40–50°C wird anschliessend eine Lösung von Diisopropanolamin in Isopropanol gemäss Tabelle 1 langsam zugegeben. Die exotherme Reaktion wird so geleitet, dass die Temperatur 80°C nicht überschreitet. Nach Ende der Zugabe wird die Temperatur von 80–85°C noch 2 Stunden gehalten.

Tabelle 1

| Copolymerisat | A | B | C | D | E | F | G | H |
|---|---|---|---|---|---|---|---|---|
| Monomerengemisch: | | | | | | | | |
| MMA | 60 | 70 | 60 | 70 | 60 | 50 | 50 | 60 |
| BMA | — | 10 | — | 10 | — | 10 | 10 | — |
| IMA | — | — | 20 | — | 20 | — | — | — |
| TBA | 15 | — | — | — | — | — | 20 | 20 |
| GMA | 25 | 20 | 20 | 20 | 20 | 40 | 20 | 20 |
| Aminlösung | | | | | | | | |
| DIPA | 23,4 | 18,7 | 18,7 | 18,7 | 18,7 | 37,5 | 18,7 | 18,7 |
| IP | 30 | 30 | 30 | 30 | 30 | 30 | 30 | 30 |

| | | | |
|---|---|---|---|
| MMA: | Methylmethacrylat | GMA: | Glycidylmethacrylat |
| BMA: | Butylmethacrylat | DIPA: | Diisopropanolamin |
| IMA: | Isobutylmethacrylat | IP: | Isopropanol |
| TBA: | Tert.-Butylacrylat | | |

In den Beispielen B und C wurde anstelle von Azobisisobutyronitril tert.-Butylperhexanoat eingesetzt.

Die Copolymerisatlösungen sind schwach gelb gefärbt und sind nach Zusatz von Essigsäure bei pH-Werten zwischen 4 und 6 unendlich mit Wasser verdünnbar.

Zur Herstellung eines Grundlackes wird die Harzlösung mit verdünnter Essigsäure (ca. 30%) auf einen pH-Wert von 5 bis 6 eingestellt und mit deionisiertem Wasser auf 15–30% Festkörpergehalt verdünnt.

Auf den in Beispiel 1 angegebenen Holzarten wurden Zweischichtüberzüge aufgebracht, wobei die Grundlacke Copolymerisate gemäss Tabelle 1, A–H enthielten. Als Deckschicht wurden die Dispersionen gemäss Beispiel 1 und 2 eingesetzt.

Der Grundlack wurde in einer Menge von ca. 30 g Festharz pro m² aufgebracht und 5 Minuten bei 85°C getrocknet. Die beschichtete Fläche war einwandfrei schleifbar (Schleifpapier P 320). Nach dem Schleifen wurde der Dispersionslack aufgebracht und ebenfalls 5 Minuten bei 85°C getrocknet. Der 30 µm starke Überzug zeigte eine optisch einwandfreie, glänzende, sehr harte und sehr kratzfeste Oberfläche, wobei die verschiedenen Aufbauten nur geringfügige Unterschiede zeigten. Gestapelte Hölzer zeigten auch bei Belastung kein Verkleben. Der Buchholztest erreichte in allen Fällen Werte um 1,7 mm. Die Farbe und Maserung war stark vertieft. Die Eigenschaften der Beschichtung entsprechen denen eines optimalen Nitrolackaufbaues. Bei Wasserlagerung trat nach etwa 2 Stunden eine leichte Quellung des Überzuges ein.

Beispiel 3

Praktisch gleiche Ergebnisse werden erzielt, wenn man eine Dispersion einsetzt, welche gemäss Beispiel 1 hergestellt wird, wobei jedoch die Flotte aus 1314 Teilen deionisiertem Wasser, 18 Teilen des Natriumsalzes eines mit 2 Mol Äthylenoxid umgesetzten und sulfierten Octylphenols, 12 Teilen eines mit 16 Mol Äthylenoxid umgesetzten Octylphenols und 7,2 Teilen vinylsulfonsaurem Natrium besteht und folgende Zuläufe eingesetzt werden:

1. Eine Monomerenmischung aus 697 Teilen Methylmethacrylat, 192 Teilen n-Butylmethacrylat, 180 Teilen Äthylacrylat und 60 Teilen Styrol;

2. 203 Teilen einer 36%igen wässrigen Lösung von N-Methylolmethacrylamid;

3. eine Lösung von 3 Teilen Ammoniumperoxodisulfat in 90 Teilen Wasser.

Als Koaleszermittel wird eine Mischung von 139 Teilen des in Beispiel 1 verwendeten hochsiedenden Lacklösungsmittels und 194 Teilen Äthylenglykolmonoäthylätheracetat eingesetzt.

**Patentansprüche**

1. Verwendung von N-Methylol(meth)acrylamid enthaltenden Polymerdispersionen, welche aus

30–65 Gew-% Methylmethacrylat
10–17 Gew.-% Äthylacrylat
10–30 Gew.-% Butylmethacrylat
5–20 Gew.-% Styrol und
3–10 Gew.-% N-Methylol(meth)acrylamid
aufgebaut sind und welchen als Koaleszermittel 5 bis 15 Gew.-% (bezogen auf die Dispersion) eines Gemisches aus

20–65 Gew.-% eines hochsiedenden Lacklösungsmittels vom Typ des 2,2,4-Trimethylpentan-1,5-diol-mono-trimethylessigsäureesters und
80–35 Gew.-% Äthylenglykolmonoäthylätheracetat und/oder Äthylenglykolmonobutylätheracetat
zugesetzt wurde, gegebenenfalls in Kombination mit Grundlacken auf Basis kationischer wasserlöslicher Acrylcopolymerisate für offenporige bis geschlossenporige Lackierungen von Holzoberflächen.

2. Verwendung von Dispersionen aus

45–65 Gew.-% Methylmethacrylat
12–15 Gew.-% Äthylacrylat
15–25 Gew.-% Butylmethacrylat
5–10 Gew.-% Styrol und
7– 9 Gew.-% N-Methylol-methacrylamid
welchen als Koaleszermittel, bezogen auf die Dispersion,

4–6 Gew.-% des obengenannten hochsiedenden Lacklösungsmittels und
7–9 Gew.-% Äthylenglykolmonoäthylätheracetat oder
3–5 Gew.-% Äthylenglykolmonobutylätheracetat
zugesetzt wurde, für den in Anspruch 1 angegebenen Zweck.

3. Verwendung von wässrigen Lösungen kationischer Aminaddukte von Glycidylgruppen tragenden Copolymerisaten aus

20–40 Gew.-% Glycidylmethacrylat
40–80 Gew.-% Methylmethacrylat und
0–40 Gew.-% anderer (Meth)acrylsäure(cyclo)alkylester, deren Homopolymere eine Glasübergangstemperatur von über +40°C aufweisen
als Grundlack für die Dispersionen für den in Anspruch 1 angegebenen Zweck.

**Claims**

1. Use of N-methylol(meth)acrylamide containing polymer dispersions consisting of

30–65% by weight of methylmethacrylate
10–17% by weight of ethylacrylate
10–30% by weight of butylmethacrylate
5–20% by weight of styrene and

3-10% by weight of N-methylol(meth)acrylamide
and containing as coalescing agent 5 to 15% by weight (calculated on the dispersion) of a mixture consisting of

20-65% by weight of a high boiling solvent of the type of 2,2,4-trimethylolpentane-1,5-diol-monotrimethyl acetate and
80-35% by weight of ethylene glycol monoethylether acetate and/or ethyleneglycol monobutylether acetate,
optionally in conjunction with base coats based on cationic water soluble acrylic copolymers, for open or closed pore coatings for wood surfaces.

2. Use of dispersions consisting of

45-55% by weight of methylmethacrylate
12-15% by weight of ethylacrylate
15-25% by weight of butylmethacrylate
5-10% by weight of styrene and
7- 9% by weight of N-methylol-methacrylamide,
containing as coalescing agent, calculated on the dispersion
4-6% by weight of the above-mentioned high boiling solvent and
7-9% by weight of ethyleneglycolmonoethylether acetate or
3-5% by weight of ethyleneglycolbutylether acetate
for the purpose mentioned in claim 1.

3. Use of aqueous solutions of cationic amine adducts of glycidyl group containing copolymers consisting of

20-40% by weight of glycidylmethacrylate
40-80% by weight of methylmethacrylate
0-40% by weight of other (cyclo)alkyl(meth)acrylates, the homopolymers of which having a glass transition temperature of over +40°C, as base coat for the dispersions for the purpose mentioned in claim 1.


**Revendications**

1. Utilisation de dispersions de polymères contenant du N-méthylol(méth)acrylamide qui sont constituées de:

30 à 65% en poids de méthacrylate de méthyle
10 à 17% en poids d'acrylate d'éthyle
10 à 30% en poids de méthacrylate de butyle
5 à 20% en poids de styrène, et
3 à 10% en poids de N-méthylol(méth)acrylamide
et auxquelles on a ajouté, comme agent de coalescence, de 5 à 15% en poids (par rapport à la dispersion) d'un mélange constitué de
20 à 65% en poids d'un solvant pour laques de point d'ébullition élevé du type du monoester triméthylacétique du 2,2,4-triméthylpentane-1,5-diol, et
80 à 35% en poids d'acétate de l'éther monoéthylique de l'éthylèneglycol et/ou de l'acétate de l'éther monobutylique de l'éthylèneglycol,
le cas échéant en combinaison avec des couches de fond à base de copolymères acryliques hydrosolubles cationiques pour l'enduction de surfaces de bois à pores ouverts à fermés.

2. Utilisation de dispersions de

45 à 55% en poids de méthacrylate de méthyle
12 à 15% en poids d'acrylate d'éthyle
15 à 25% en poids de méthacrylate de butyle
5 à 10% en poids de styrène et
7 à 9% en poids de N-méthylolméthylacrylamide
auxquelles on a ajouté comme agents de coalescence, par rapport à la dispersion,
4 à 6% en poids des solvants pour laques de point d'ébullition élevé indiqué ci-dessus, et
7 à 9% en poids d'acétate de l'éther monoéthylique de l'éthylène glycol ou
3 à 5% en poids d'acétate de l'éther monobutylique de l'éthylèneglycol
pour le but indiqué dans la revendication 1.

3. Utilisation de solutions aqueuses de produits d'additions aux amines cationiques de copolymères portant des groupes glycidyle constitués de

20 à 40% en poids de méthacrylate de glycidyle
40 à 80% en poids de méthacrylate de méthyle et
0 à 40% en poids d'autres esters (cyclo)alkylique de l'acide (méth)acrylique, dont les homopolymères présentent une température de transition vitreuse de plus de +40°C
comme couche de fond pour les dispersions pour le but indiqué dans la revendication 1.